# EUROPEAN PATENT SPECIFICATION

(11) **EP 4 134 848 B1**
(45) Date of publication and mention of the grant of the patent: **14.02.2024**
(21) Application number: 21191186.2
(22) Date of filing: 13.08.2021
(51) Int. Cl.: G06F 21/55

(54) **DEVICES AND METHODS FOR SECURITY AND OPERATIONAL BEHAVIOR ASSESSMENT OF SOFTWARE SERVICES**
VORRICHTUNGEN UND VERFAHREN ZUR SICHERHEITS- UND BETRIEBSVERHALTENSBEWERTUNG VON SOFTWARE-DIENSTEN
DISPOSITIFS ET PROCÉDÉS D'ÉVALUATION DE COMPORTEMENT OPÉRATIONNEL ET DE SÉCURITÉ DE SERVICES LOGICIELS

(43) Date of publication of application: 15.02.2023
(73) Proprietor: Nokia Technologies Oy, 02610 Espoo (FI)
(72) Inventor: KHARE, Saurabh, 560005 Bangalore (IN); AGGARWAL, Chaitanya, 80637 Munich (DE); SAMDANIS, Konstantinos, 81927 Munich (DE); PULIPATI, Narasimha, 560024 Bangalore (IN)
(74) Representative: Novagraaf Technologies

(56) References cited:
- WO-A1-2012/027588
- US-A1- 2019 243 836
- US-B1- 7 200 588

## Description

### TECHNICAL FIELD

**.** Various example embodiments related generally to devices and methods for the assessment of the security and operational behavior of software services using data analytics.

### BACKGROUND

.5G networks rely on service-based architectures in which softwarization, virtualization, cloudification, and Artificial Intelligence are key complementary technologies required to flexibly and efficiently meet the diversified service requirements.

.Softwarization refers to the process where a given functionality runs in software instead of hardware. It offers a high degree of flexibility and reconfigurability as the functionality can be enhanced by updating the software.

. Virtualization refers to the process of creating virtual instances of hardware platforms, operating systems, storage devices, and computing network resources. It enables softwares to run in commercial off-the-shelf equipment by exploiting virtual machines instead of dedicated hardware.

. Network Virtualization technologies extend virtualization to the network infrastructure including the core network, the access network and the transport network. In particular, Network Functions Virtualization (NFV) extends virtualization to the network functions.

**.** Network cloudification refers to the process of extending cloud platforms, technologies, and virtualization capabilities throughout the network.

**.** Artificial Intelligence (Al) technologies are introduced in 5G networks to provide efficient processing and storage of the flows of data generated at the different network elements. In particular, data analytics mechanisms introduced in 5G networks may implement machine learning algorithms and models.

**.** In such network architectures, software services (e.g. virtualized network functions, applications) are deployed on one or more cloud platforms and/or interact with other software services that are deployed on one or more cloud platforms.

.When the software services run on third party platforms or on cloud platforms, the assessment of the security and the operational behaviour of the software services is managed by the third party and cloud service providers. This means that the network operator is fully dependent on the third party service providers or on the cloud service providers for detecting and mitigating any security issue or any abnormal operational behaviour occurring on the software services deployed on private third party servers or on the cloud and/or interacting with software services that are deployed on private third servers or on the cloud.

**.** Such dependence is suboptimal as the network operator cannot evaluate by itself the security and operational behaviour of the software services that are part of the network. The network operator needs to wait for the assessment performed by the third party and cloud service providers which can be provided very late with the risk of impacting the network within the operator premises due to the interactions between the software services.

**.** There is accordingly a need for enhanced mechanisms for security and/or operational behaviour assessment of software services deployed in private servers and platforms or on cloud-based networks.

US 7 200 588 B1, US 2019/243836 A1, and WO 2012/027588 A1 are relevant prior art documents.

### SUMMARY

. The scope of protection is set out by the independent claims. The embodiments, examples and features, if any, described in this specification that do not fall under the scope of the protection are to be interpreted as examples useful for understanding the various embodiments or examples that fall under the scope of protection.

. In a first aspect, there is provided a data analytics producer configured to receive a request for data analytics related to one or more target software services; receive input data comprising software service metadata associated with the target software services and one or more audit log files associated with the target software service; generate data analytics from the input data.

. In an embodiment, the target software service comprises one or more software service files, the software service metadata comprising expected information associated with the software service files, the expected information associated with a software service file comprising information related to the software service file and information related to expected operational features and/or expected performance of the software service file.

. In an embodiment, the software service metadata is generated by a vendor of the target software service.

. In an embodiment, the software service metadata is updated by a vendor of the target software service when the target software service is updated.

**. In** an embodiment, the audit log file associated with a target software service comprises audit log, the audit log comprising current information associated with the software service files, the current information associated with a software service file comprising information related to the software service file and information related to current operational features and/or current performance of the software service files.

. In an embodiment, the data analytics producer is configured to negotiate audit log generation specifications with a data analytics request provider.

**. In** an embodiment, the audit log file associated with a target software service is generated regularly and/or upon request.

**.** In an embodiment, the audit log file associated with a target software service is generated according to the audit log files generation specifications.

**.** In an embodiment, the request for data analytics is triggered according to a request for security assessment and/or for operational behaviour assessment in relation with one or more target software services operable in a telecommunication network.

**. In** an embodiment, the request for security assessment and/or for operational behaviour assessment is triggered by a security management entity operable in the telecommunication network or by the one or more target software services.

**. In** an embodiment, the request for security assessment and/or for operational behaviour assessment is triggered depending on performance measurements associated with the one or more target software services.

**.** In an embodiment, the one or more target software services are deployed on one or more cloud platforms and/or on one or more private servers and/or private platforms and/or interact with one or more software services deployed on one or more cloud platforms and/or on one or more private servers and/or private platforms.

**.** In an embodiment, the target software service is one of a network function, a virtualized network function, a management function, a virtualized management function, or a software application.

**.** In an embodiment, the data analytics producer is implemented in a network data analytics function or in a management data analytics service.

**.** In an embodiment, the data analytics producer is configured to send a response on the request for data analytics, the response comprising information related to one or more detected and/or predicted events related to the security and/or the behaviour of the one or more target software services.

**.** In a second aspect, there is provided a method comprising: receiving a request for data analytics related to one or more target software services; receiving input data comprising software service metadata associated with the target software services and one or more audit log files associated with the target software service; generating data analytics from the input data. The method may be performed by a data analytics producer as disclosed herein. The method may include any step performed by a data analytics producer as disclosed herein.

**. One** or more example embodiments provide an apparatus comprising means for performing a method according to the second aspect. The means may include circuitry configured to perform one or more or all steps of the method according to the second aspect. The means may include at least one processor and at least one memory including computer program code, wherein the at least one memory and the computer program code are configured to, with the at least one processor, cause the apparatus to perform one or more or all steps of the method according to the second aspect.

. According to one or more example embodiments an apparatus comprises at least one processor and at least one memory including computer program code. The at least one memory and the computer program code may be configured to, with the at least one processor, cause the apparatus to: receive a request for data analytics related to one or more target software services; receive input data comprising software service metadata associated with the target software services and one or more audit log files associated with the target software service; generate data analytics from the input data.

**. Generally,** the at least one memory and the computer program code may be configured to, with the at least one processor, cause the apparatus to perform one or more or all steps of a method according to the second aspect.

. In another aspect there is provided a non-transitory computer-readable medium storing computer-executable instructions that, when executed by at least one processor at an apparatus, cause the apparatus to perform one or more or all steps of the method according to the second aspect.

**.** Exemplary embodiments provide mechanisms enabling a network operator to predict and/or the detect security issues and/or abnormal operational behaviour occurring on one or more target software services deployed in one or more private third party platforms and/or on one or more cloud platforms.

**.** Exemplary embodiments provide mechanisms enabling a network operator to mitigate security issues and malware attacks occurring on one or more target software services deployed on one or more private third party servers and platforms and/or on public and/or private cloud platforms and/or interacting with one or more software services deployed on one or more private third party servers and platforms and/or on one or more cloud public and/or private platforms.

**.** Further advantages will become clear to the skilled person upon examination of the drawings and the detailed description.

### BREIEF DESCRIPTION OF THE DRAWINGS

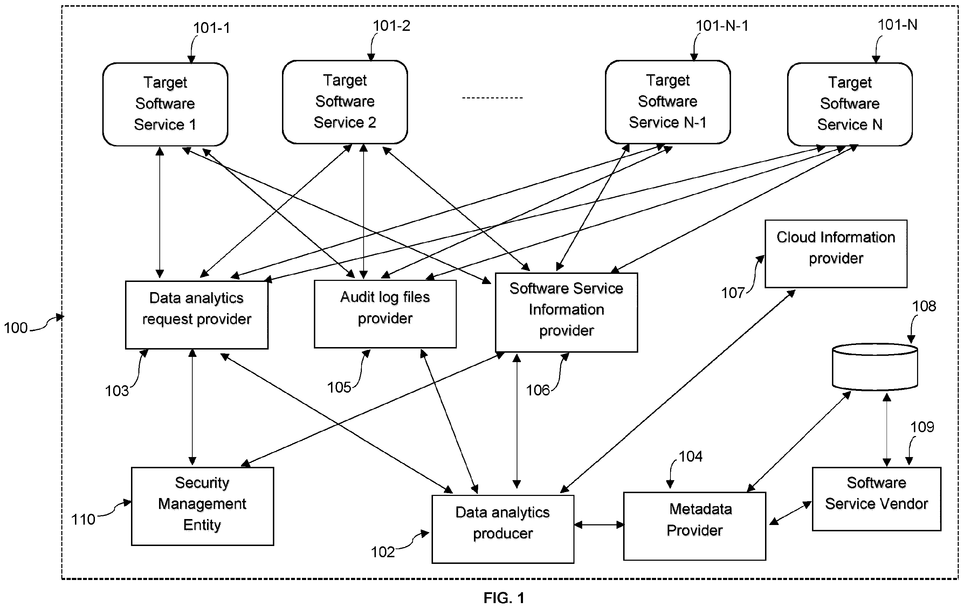

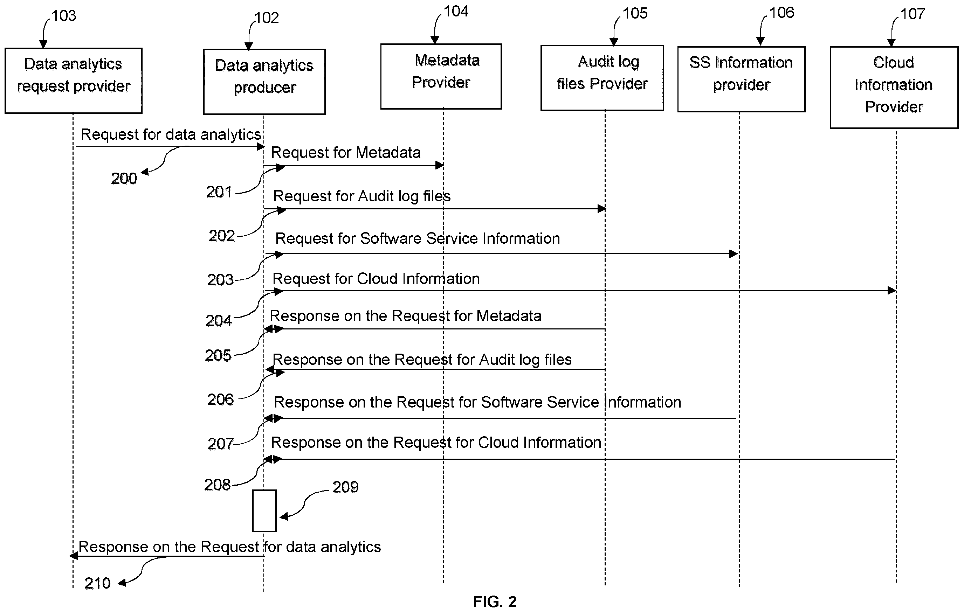

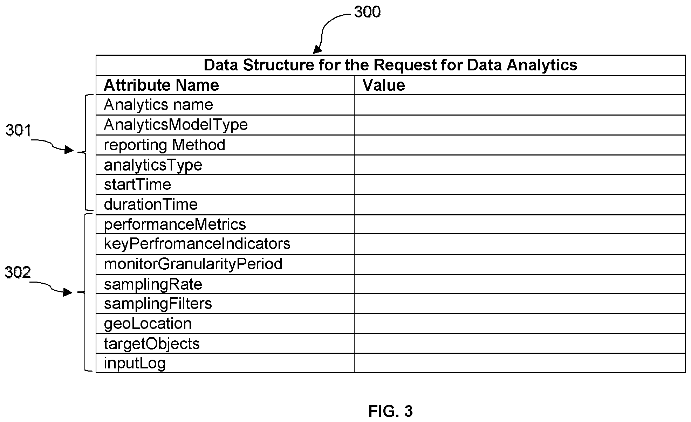

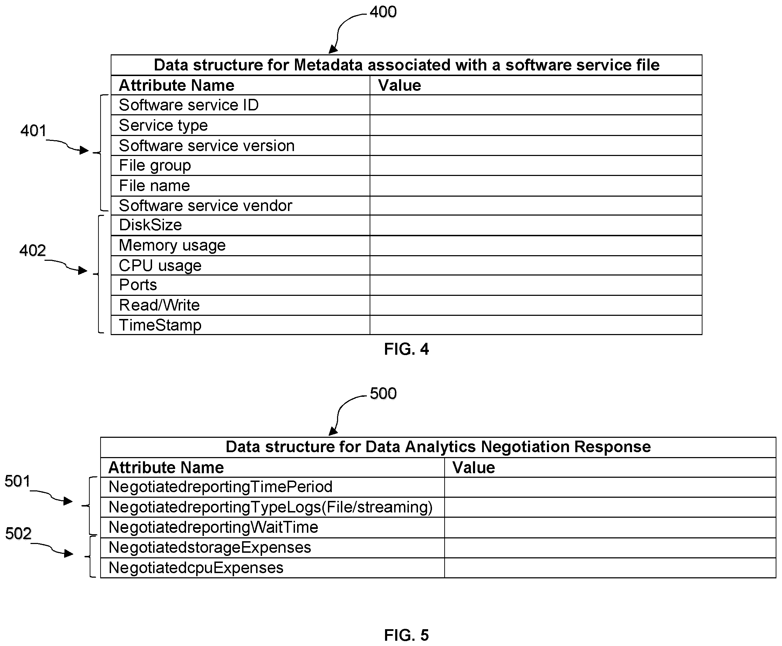

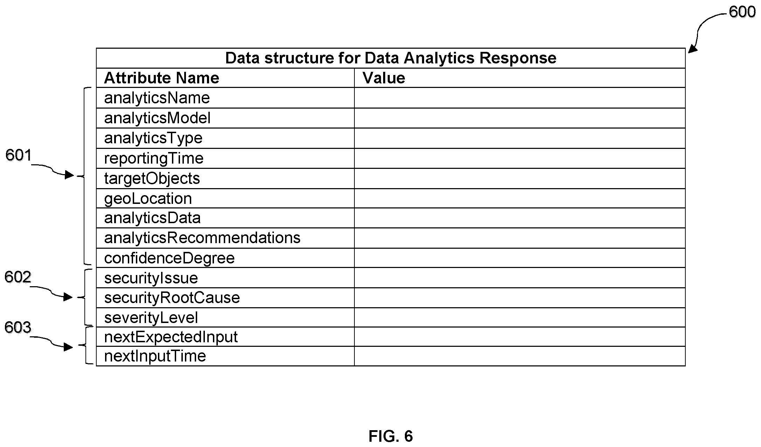

**. The** accompanying drawings, which are incorporated in and constitute a part of this specification, illustrate example embodiments together with the general description given above, and the detailed description given below.
**.** FIG. 1 is a connection flow illustrating an exemplary telecommunication network in which exemplary embodiments may be implemented.
**.** FIG. 2 is a connection flow illustrating the generation of data analytics for the assessment of the security and/or operational behaviour of one or more target software services, according to exemplary embodiments.
**.** FIG. 3 is a block diagram illustrating a data structure for a request for data analytics, according to exemplary embodiments.
**.** FIG. 4 is a block diagram illustrating a data structure for software service metadata, according to exemplary embodiments.
**.** FIG. 5 is a block diagram illustrating a data structure for a data analytics negotiation response, according to exemplary embodiments.
**.** FIG. 6 is a block diagram illustrating a data structure for a data analytics response, according to exemplary embodiments.

**.** It should be noted that these figures are intended to illustrate the general characteristics of devices, methods, and structures utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

**.** Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

**.** Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

**.** Exemplary embodiments provide devices, methods, and computer program products enabling data analytics-based assessment of security and/or operational behaviour of one or more target software services operable in telecommunication network such that the one or more target software services are deployed in one or more private servers or platforms and/or in one or more cloud platforms and/or interact with one or more software services that are deployed in one or more private servers or platforms and/or in one or more cloud platforms.

. A telecommunication network is a system designed to transfer data from a network entity to one or more network entities. Data transfer involves data switching, transmission media, and system controls in addition to hardware and/or software resources that need to be deployed for data storage and/or processing. The telecommunication network is managed by a network operator.

.A cloud-based telecommunication network refers to a telecommunication network involving one or more public and/or private cloud platforms, each cloud platform service being provided by a cloud service provider. The cloud service providers of the one or more public and/or private cloud platforms are third party service providers.

. A software service refers to any software function/functionality/application that is part of the telecommunication network and that is either deployed in a private server or platform or in a cloud platform and/or interacting with one or more software services that are deployed in one or more private servers or platforms or in one or more cloud platforms involved in the telecommunication network.

. The software service comprises one or more files (also referred to as software service file). A software service file may be an executable file or a library file. A library file is a current executable code that provides information on a current functionality.

. A target software service refers to a software service concerned with the security and/or operational behavior assessment. In other words, the telecommunication network comprises a plurality of software services and the assessment of the security and/or operational behaviour is performed to evaluate these aspects on one or more target software services.

. FIG. 1 illustrates an exemplary telecommunication network 100 in which exemplary embodiments may be implemented. The telecommunication network 100 comprises one or more target software services 101-i, with i varying from 1 to N, and N designating the total number of target software services.

**. The** target software services 101-i are deployed in one or more private servers and/or private platforms and/or cloud platforms (not illustrated in FIG. 1) and/or interact with one or more software services (not illustrated in FIG. 1) that are deployed in one or more private servers and/or private platforms and/or cloud platforms.

**.** The telecommunication network 100 may be a digital system part of a communication system, a data processing system, or a data storage system. Exemplary digital systems comprise, without limitations:
- communication systems (e.g. radio communication systems, wireless communication systems, optical fiber-based communication systems, optical wireless communication systems, satellite communication systems), and
- storage systems (e.g. cloud computing systems);

**. According** to some embodiments, the telecommunication network 100 may be or may comprise:
- a wired network (e.g. optical fiber-based networks);
- a wireless network (e.g. radio communication networks);
- an acoustic network (e.g. underwater acoustic communication systems);
- a molecular network (used for example in underground structures such as tunnels and pipelines).

. In application to wireless networks, the telecommunication network 100 may be any wireless network involving any type of wireless propagation medium suitable for this type of connectivity. Exemplary wireless communication networks comprise, without limitation, ad-hoc wireless networks used in local area communications, wireless sensor networks, and radio communication networks (e.g. Long Term Evolution or LTE, LTE-advanced, 3G/4G/5G and beyond).

**.** Exemplary applications to wireless networks comprise :
- Machine-To-Machine (M2M) ;
- Device-To-Device (D2D) ;
- Industry 4.0 ;
- Internet of Things or loT (for example vehicle-to-everything communications) involving networks of physical devices, machines, vehicles, home alliances and many other objects connected to each other and provided with a connectivity to the Internet and the ability to collect and exchange data without requiring human-to-human or human-to-computer interactions.

. In exemplary loT applications, the telecommunication network 100 may be a wireless loT network representing low energy power-consumption/long battery life/low-latency/low hardware and operating cost/high connection density constraints such as low-power wide area networks and low-power short-range loT networks. The telecommunication network 100 may be any wireless network enabling loT in licensed or license-free spectrum.

**.** Exemplary wireless technologies used in loT applications may comprise:
- short range wireless networks (e.g. Bluetooth mesh networking, Light-Fidelity, Wi-FiTM, and Near-Field communications);
- medium range wireless networks (e.g. LTE-advanced, Long Term Evolution-Narrow Band, NarrowBand loT), and
- long range wireless networks (e.g. Low-Power Wide Area Networks (LPWANs), Very small aperture terminal, and long-range Wi-Fi^{™} connectivity).

. Exemplary applications of M2M and loT applications comprise, without limitation:
- consumer applications (e.g. Internet of Vehicles, home automation, smart cities, wearable technologies, and connected health), and
- commercial applications (e.g. digitalized healthcare connecting medical resources and healthcare services in which special monitors and sensors may be used to enable remote health monitoring and emergency notifications, smart traffic control, and road assistance).

. In another application to optical fiber networks, the telecommunication network 100 may be any data network in which any optical fiber link is designed to carry data over short or long distances. Exemplary applications using optical fiber links over short distances comprise high-capacity networks such as data center interconnections. Exemplary applications using optical fiber links over long distances comprise terrestrial and transoceanic transmissions. In such applications, network data generated by the network elements operable in the telecommunication network 100 may be carried by optical signals polarized according to the different polarization states of the optical fiber. The optical signals propagate along the fiber-based link according to one or more propagation modes.

. Exemplary applications of optical fiber data networks comprise, without limitation, aerospace and avionics, data storage (e.g. in cloud computing systems, automotive, industry, and transportation). Such applications may involve transfer of voice (e.g. in telephony), data (e.g. data supply to homes and offices known as fiber to the home), images or video (e.g. transfer of internet traffic), or connection of networks (e.g. connection of switches or routers and data center connectivity in high-speed local area networks).

. The telecommunication network 100 may any type of wired/optical/wireless network in which softwarization and/or virtualization technologies are implemented. Accordingly, in addition to software functions, functionalities, and applications, a software service may be any softwarized or virtualized network entity or network functionality or network function.

. In application to 5G (and beyond) networks, a software service may be a virtualized network function corresponding to a network functionality deployed on the access network, the transport network, or the core network or a virtualized management function corresponding to a management functionality deployed on the access network, the transport network, or the core network. The virtualized network function is deployed at the control plane, the control plane designating an area of operations of the telecommunication network 100 carrying signaling traffic. The virtualized management function is deployed at the management plane, the management plane designating an area of operations of the telecommunication network 100 carrying administrative traffic.

**.** Exemplary virtualized network functions comprise, without limitation :
- access and mobility management functions
- session management functions ;
- user plane functions ;
- Policy control functions ;
- authentication server functions ;
- Unified data management functions ;
- network exposure functions ;
- network repository functions ;
- network slice selection functions.

**.** Exemplary embodiments enable security assessment and/or operational behaviour assessment of one or more target software services.

**.** Security assessment enables the prediction and/or the detection of any event related to the security of the one or more target software services.

**.** Operational behaviour assessment enables the prediction and/or the detection of any abnormal operational behaviour on the one or more target software services.

**.** The operational behaviour of a software service may be characterized by operational features or characteristics and/or by the performance of the software service including for example the resource (e.g. storage, processing) consumption.

**.** The expected operational behaviour of a software service is specified by metadata (also referred to as software service metadata) associated with the software service.

**.** The software service metadata is generated by the software service vendor and updated by the software service vendor during the lifecycle of the software service (for example when the software service is updated).

.The software service metadata associated with a software service comprises expected information associated with each of the one or more software service files comprised in the software service. More specifically, the expected information associated with a software service file comprises information related to the software service file and information related to the expected operational features and/or the expected performance of the software service file. The expected performance may include expected resource (e.g. storage, computing) consumption of the software service file.

**.** The information related to a software service file is any information enabling a unique identification of the software service file.

**.** For example, the information related to the software service file comprises one or more pieces of the information listed below:
- a software service identifier (ID) specifying an identifier of the software service in which is comprised the software service file. In an embodiment in which the software service is a network function, the identifier is referred to as a Network Function Identifier and is denoted by NF ID or NF Set ID;
   - a service type specifying the service ensured by the software service file (e.g. authentication, context management) ;
   - a software service version specifying a version of the software service in which is comprised the software service file ;
   - a file group specifying if the software service file is a library file or an executable file ;
   - a file name specifying a name of the software service file ;
   - a software service vendor specifying the vendor of the software service in which is comprised the software service file.

**.** For example, the information related to the expected operational features and/or the expected performance of the software service file comprises :
- a disk size specifying the amount of disk size expected to be used by the software service file ;
- a memory specifying the amount of memory expected to be used by the software service file ;
- CPU usage specifying the amount of processing resources expected to be used by the software service file ;
- ports numbers specifying the port number expected to be used by the software service file ;
- read/Write performance specifying read/write bytes per second expected to be performed by the software service file ;
- time stamp performance specifying expected time stamp related with logs provided.

**.** In order to characterize the operational features and the performance of the software service at a specific time during the functioning of the software service, the software service generates, regularly and/or upon request, audit log files associated with the software service.

**.** The audit log files comprise audit logs that correspond to current metadata associated with the software service. The audit log is a record of current activities and operations occurring on the software service at specific times. More specifically, the audit log comprises current information associated with each of the one or more software service files comprised in the software service. The current information associated with a software service file comprises information related to the software service file and information related to the current operational features and/or current performance of the software service file.

**.** By comparing the expected operational behaviour of a target software service, defined by the software service metadata associated with the target software service, with the current operational behaviour, defined by the audit log associated with the target software service, security issues and/or abnormal operational behaviours of the software service can be detected and/or predicted.

**.** Exemplary security issues comprise malware attacks on the software services.

**.** Exemplary abnormal operational behaviours comprise, without limitation :
- an excessive number of message rejection ;
- a high CPU access and usage for a long time-period ;
- unexpected communication with known peers ;
- communication with unknown peers
- a new software service file is added in the software service without any metadata information ;
- the content of one or more software service files is modified by unknown software and is made unreadable, which enables detecting ransomware attacks ;
- a software service file comprised in the software service is consuming more processing and/or storage resources than expected in the metadata associated with the software service file;
- a software service file comprised in the software service is sending data to a port other than the expected port defined in the metadata associated with the software service file.

**.** Security assessment and/or operational behaviour assessment according to exemplary embodiments enable the network operator to perform mitigation actions. Exemplary mitigation actions comprise, without limitation :
- moving one or more target software services to a different cloud plarform ;
- changing the privilege of one or more target software services (e.g. reducing the responsibility or permission), and
- limiting the interaction of one or more target software services with other software services inside the operator premises.

**.** Security assessment and/or operational behaviour assessment services may be triggered by one or more target software services 101-i and/or by a security management entity 110.

**.** Security assessment and/or operational behaviour assessment according to exemplary embodiments is based on data analytics mechanisms. More specifically, data analytics mechanisms are used to convert input data into output data that enables security and/or operational behaviour assessment.

**.** Data analytics provision is defined according to a service-oriented approach described as an interaction between a data analytics request provider (that can be the final data analytics consumer) and a data analytics producer.

**.** Accordingly, the telecommunication network 100 further comprises a data analytics request provider 103 and a data analytics producer 102. The data analytics request provider 103 requests data analytics services or operations from the data analytics producer 102. The interaction between the data analytics request provider 103 and the data analytics producer 102 may use a request or subscription model and service-based interfaces.

**.** In an embodiment, data analytics generation uses machine learning algorithms.

**.** The input data comprises at least software service metadata associated with the one more target software services 101-i and audit log files associated with the one or more target software service 101-i.

**.** The software service metadata associated with the one or more target software services is generated and updated by a software service vendor 109 that designates one or more manufacturers of the one or more target software services 101-i.

**.** The software service vendor 109 is configured to send the generated and updated software service metadata associated with the one or more target software services to a metadata provider 104 regularly (for example after each update of the software service metadata) and/or upon receiving a request for software service metadata from the metadata provider 104.

**.** The software service vendor 109 may store the generated and/or updated metadata in a database 108 from which the metadata provider 104 may directly load the software service metadata when needed. The metadata provider 104 accordingly communicates with the software service vendor 109 and the database 108 for the collection of the software service metadata associated with the one or more target software services 101-i.

**.** The audit log files associated with the one or more target software services 101-i are generated by the one or more target software services 101-i :
- regularly ; or
- upon certain audit log files generation conditions (e.g. depending on threshold crossing conditions related to performance metrics or indicators such as network load surpassing a threshold), or
- upon receiving a request for audit log files from an audit log files provider 105 operable in the telecommunication network 100.

**.** Accordingly, the audit log files provider 105 is configured to communicate with the one or more target software services 101-i for the collection of the audit log files associated with the one or more target software services 101-i.

**.** Input data may further comprise cloud information provided by a cloud information provider 107 and software service information provided by a software service information provider 106.

**.** Cloud information associated with a target software service 101-i may comprise information related to the usage of cloud processing resources and/or the usage of cloud storage resources by the target software service 101-i.

**.** The software service information associated with a target software service 101-i may comprise load information associated with the target software service 101-i and performance measurements (e.g. success/failure rates on a KPI) associated with the target software service 101-i. The software service information provider 106 accordingly communicates with the security management entity 110 for the collection of the load information associated with the target software services 101-i. Further, the software service information provider 106 communicates with the one or more target software services 101-i for the collection of the performance measurements.

**.** The output data produced by data analytics mechanisms is any type of statistics or prediction data that can be processed, interpreted, and/or used for detailed analysis with the aim of detecting and/or preventing one or more events related with the security and/or the operational behavior of the one or more target software services.

**.** The data analytics producer 102 communicates with the data analytics request provider 103 for the operations related with the data analytics service and communicates with the metadata provider 104, the audit log files provider 105, the software service information provider 106, and the cloud information provider 107, for the operations related with the collection of input data required for data analytics generation.

**.** In an embodiment, the request for data analytics is triggered by the data analytics request provider 103 according to a request for security assessment and/or for operational behaviour assessment in relation with one or more target software services 101-i. The request for security assessment and/or for operational behaviour assessment may be triggered by the security management entity 110 or by one or more target software services 101-i by sending a request for a security assessment and/or operational behaviour assessment to the data analytics request provider 103.

**.** For example, the request for security assessment and/or for operational behaviour assessment is triggered (by one or more target software services 101-i or by the security management entity 110) depending on performance measurements associated with the one or more target software services 101-i. For example, the security assessment and/or operational behavior assessment is triggered depending on variation on one or more Key Performance Indicators (KPI) associated with the one or more target software services 101-i.

**.** Accordingly, the data analytics request provider 103 communicates with the one or more target software services 101-i and communicates with the security management entity 110 for the operations related with the security and/or operational behaviour assessment services.

**.** Discovery and selection procedures may be performed before establishing any communication link between entities in the telecommunication network 100. For example, the data analytics request provider 103 may perform discovery and selection procedures to select the data analytics producer 102 that supports the requested analytics service and the required data analytics capabilities. Similarly, the data analytics producer 102 may perform discovery and selection procedures to select the metadata provider 104 and/or the audit log files provider 105 and/or the software service information provider 106 and/or the cloud information provider 107 that supports the required data collection service.

**.** In embodiments in which an entity communicating with the data analytics producer 102 is a third party entity, the discovery and selection procedures comprise an authentication step for authenticating the third party. For example, third party authentication is performed via a network exposure function (e.g. Exposure Governance Management Function or EGMF) as defined in 3GPP standards.

**.** Discovery and selection procedures may be performed using the methods defined in 3GPP standards and are not detailed in the present disclosure. In the following description, the data analytics producer 102 corresponds to the data analytics producer selected by the data analytics request provider 103 during the discovery and selection phase. Similarly, the metadata provider 104, the audit log files provider 105, the software service information provider 106, and the cloud information provider 107 correspond to the providers of data (respectively software service metadata, audit log files, software service information, and cloud information) selected by the data analytics producer 102 during the discovery and selection phase.

**.** In an exemplary application to 5G and beyond telecommunication networks, the data analytics producer 102 may be implemented in a Management Data Analytics Service (MDAS). The MDAS is defined in current 3GPP standards as a management entity configured to provide management data analytics to support network management and orchestration at the Radio Access Network level or at the Core Network level.

. In another exemplary application to 5G and beyond networks, the data analytics producer 102 may be implemented in a Network Data Analytics Function (NWDAF) defined in current 3GPP standards as a part of the 5G core network and used for performing data collection and providing network analytics information.

. Still in an exemplary application to 5G and beyond networks, the security management entity 110 and/or the software service information provider 106 and/or the metadata provider 104 and/or the cloud information provider 107 and/or the audit log files provider 105 may be implemented as parts of the Operation, Administration and Management (OAM) service of the network operator.

. FIG. 2 is a connection flow illustrating the generation of data analytics for the assessment of the security and/or operational behaviour of one or more target software services 101-i, according to exemplary embodiments. The one or more target software services 101-i are not depicted in FIG. 2 for simplification purposes.

. At step 200, the data analytics request provider 103 triggers a data analytics service by sending a request for data analytics to the data analytics producer 102.

. The request for data analytics comprises information related to the data analytics and information related to the one or more target software services 101-i. The information related to the data analytics enable identifying a usage of the data analytics and characterizing the generation and the delivery of the data analytics. The information related to the one or more target software services 101-i enable identifying the one or more target software services 101-i.

. For example, the information related to the data analytics comprises one or more piece of the information listed below:
- an analytics name or identifier for example specifying if the data analytics is required for security assessment or for operational behaviour assessment;
- an analytics model type specifying the type of the algorithm to be used for data analytics generation (e.g. the type of the ML model or algorithm in ML-based data analytics generation) ;
- reporting method specifying the required method (e.g. streaming, files) for delivering the data analytics to the data analytics request provider 103 ;
- an analytics type specifying the type of the required analytics (e.g. statistics, predictions, recommendations, notifications) ;
- a start time specifying when the data analytics is required ;
- a duration time specifying the duration during which the data analytics is required ;

**.** For example, the information related to the one or more target software services 101-i comprises one or more pieces of the information listed below:
- performance information specifying values of performance metrics and/or key performance indicators associated with the one or more target software services 101-i ;
- monitor granularity period specifying a sampling period for the performance metrics and/or the KPIs associated with the one or more software services 101-i ;
- a sampling rate specifying a sampling rate for the performance metrics and/or the KPIs associated with the one or more software services 101-i ;
- sampling filters specifying sampling filters (e.g. threshold) for the performance metrics and/or the KPIs associated with the one or more software services 101-i ;
- target objects specifying the target software service(s) ;
- target geographical area specifying the geographical localization of the target software service(s) ;
- input log information specifying the type of data third parties can use to send input data required in the data analytics.

**.** In the exemplary embodiment illustrated in FIG.2, the request for data analytics is triggered by the data analytics request provider 103 according to a request for security assessment and/or for operational behaviour assessment in relation with the one or more target software services 101-i. The request for security assessment and/or for operational behaviour assessment may be sent by the security management entity 110 or one or more target software services 101-i to the data analytics request provider 103.

**.** In an exemplary embodiment, not illustrated in FIG.2, the data analytics request provider 103 negotiates with the data analytics request provider 102 the information related to the data analytics as comprised in the received request for data analytics depending on its capability of providing the required data analytics as requested by the data analytics request provider 103. The negotiation phase may induce an update on some of the information related to the data analytics as indicated in the request. The data analytics producer 102 thus sends to the data analytics request provider 103 a negotiation response (not illustrated in FIG. 2) comprising information related to the changes on the negotiated information. For example, the negotiation response comprises one or more pieces of the information listed below:
- a negotiated reporting time period specifying the new negotiated time period for the reporting of the data analytics ;
- a negotiated reporting type logs specifying the new negotiated data analytics reporting method ;
- a negotiated reporting wait time specifying the new negotiated waiting time period for getting the data analytics reporting ;
- negotiated storage requirements specifying the amount of storage needed for data analytics;
- negotiated processing requirements specifying the amount of processing resources needed for the data analytics.

**.** In an embodiment, the negotiation phase comprises negotiating audit log files generations specification according to which the audit log files associated with the one or more target software services 101-i will be generated by the one or more target software services 101-i.

**.** After the termination of the negotiation phase, the data analytics producer 102 triggers a data collection phase to collect the input data required to generate the requested data analytics from the metadata provider 104, the audit log files provider 105, the cloud information provider 107 and the software service information provider 106. Accordingly, the data producer 102 sends :
- at step 201, a request for software service metadata to the metadata provider 104;
- at step 202, a request for audit log files to the audit log files provider 105 ;
- at step 203, a request for software service information to the software service (SS) information provider 106 ;
- at step 204, a request for cloud information to the cloud information provider 107.

**.** The request for software service metadata and/or the request for audit log files and/or the request for software service information and/or the request for cloud information, may comprise information extracted from the request for data analytics. For example, the information extracted from the request for data analytics comprises the information related to the one or more target software services 101-i.

**.** At steps 205 to 208, the data analytics producer 102 receives responses on the requests sent at steps 201 to 204. More specifically, the data analytics producer 102 receives :
- at step 205, a response on the request for software service metadata from the metadata provider 104, the response comprising metadata associated with the one or more target software services 101-i;
- at step 206, a response on the request for audit log files from the audit log files provider 105, the response comprising audit log files associated with the one or more target software services 101-i;
- at step 207, a response on the request for software service information from the software service information provider 106, the response comprising software service information associated with the one or more target software services 101-i, and
- at step 208, a response on the request for cloud information from the cloud information provider 107, the response comprising cloud information associated with the one or more target software services 101-i.

**.** At step 209, the data analytics producer 102 generates data analytics from the collected input data and sends, at step 210, a response on the request for data analytics to the data analytics request provider 103.

**.** The response to the request for data analytics comprises at least information related to the generated data analytics. For example, the information related to the generated data analytics comprise one or more pieces of the information listed below:
- an analytics name specifying a name of the provided analytics service ;
- a name of the analytics model specifying the name of the analytics model used to generate the data analytics ;
- an analytics type specifying the type of the generated data analytics (e.g. statistics, predictions, recommendation) ;
- a reporting time specifying a time stamp related to the generated data analytics ;
- target objects specifying the objects related with the generated data analytics ;
- geographical localization specifying the location related with the generated data analytics ;
- analytics data specifying the values of the generated data analytics ;
- analytics recommendations specifying output recommendations ;
- a confidence degree specifying a confidence level related to the generated data analytics.

**.** In an embodiment, the response on the request for data analytics further comprises information related to one or more detected and/or predicted events related to the security and/or the behaviour of the one or more target software services 101-i.

**.** For example, the information related to one or more detected or predicted events related to the security of the one or more target software service 101-i comprises :
- a security issue specifying the detected or predicted security issue ; or
- a security root cause specifying the root cause result related with the detected or predicted security issue ; or
- a severity level specifying the criticality of the detected or predicted security issue (low, medium, or high).

**.** The response on the request for data analytics may further comprise information related to :
- a next expected input specifying expected next input data ; or
- a next input time specifying the expected time of the next input data.

**.** FIG. 3 is a block diagram illustrating a data structure 300 for a request for data analytics, according to exemplary embodiments.

**.** The data structure may be of any data organization, management and storage format that enables access to and/or modification of stored data. Exemplary data structures comprise arrays, linked lists, records, and objects.

**.** The data structure comprises data elements. Each data element comprises an attribute field and a value field.

**.** The data analytics request comprises information related to the data analytics and information related to the one or more target software services 101-i. Accordingly, the data structure 300 comprises data elements 301 related to the data analytics and data elements 302 related to the one or more target software services 101-i. The data elements 301 related to the data analytics enable identifying a usage of the data analytics and characterizing the generation and the delivery of the data analytics.

**.** For example, in an embodiment, the data elements 301 comprise one or more of the following:
- a first data element indicating if the data analytics is required for security assessment or for operational behaviour assessment. The attribute field comprised in the first data element may be for example 'analytics name' or 'analytics identifier' ;
- a second data element indicating the type of the algorithm to be used for data analytics generation. The attribute field comprised in the second element may be for example 'analytics model type' ;
- a third data element specifying the required data analytics reporting method. The attribute field comprised in the third data element may be for example `reporting method' ;
- a fifth data element specifying the type of the required analytics. The attribute field comprised in the fifth data element may be for example 'analytics type' ;
- a sixth data element specifying when the data analytics is required. The attribute field comprised in the sixth data element may be for example `start time' ;
- a seventh data element specifying the duration during which the data analytics is required. The attribute field comprised in the seventh data element may be for example 'duration time'.

**.** The data elements 302 enable identifying the one or more target software services 101-i.

**.** For example, in an embodiment, the data elements 302 comprise :
- a first data element specifying values of performance metrics and/or key performance indicators associated with the one or more target software services 101-i. The attribute field comprised in the first data element may be for example `performance information' ;
- a second data element specifying a sampling period for the performance metrics and/or the KPIs associated with the one or more software services 101-i. The attribute field comprised in the second data element may be for example 'monitor granularity period' ;
- a third data element specifying a sampling rate for the performance metrics and/or the KPIs associated with the one or more software services 101-i. The attribute field comprised in the third data element may be for example 'a sampling rate' ;
- a fourth data element specifying sampling filters for the performance metrics and/or the KPIs associated with the one or more software services 101-i. The attribute field comprised in the fourth data element may be for example 'sampling filters' ;
- a fifth data element specifying the target software service(s). The attribute field comprised in the fifth data element may be for example 'target objects' ;
- a sixth data element specifying the geographical localization of the target software service(s). The attribute field comprised in the sixth data element may be for example 'target geographical area' ;
- a seventh data element specifying the type of data third parties can use to send input data required in the data analytics. The attribute field comprised in the seventh data element may be 'input log information'.

**.** FIG. 4 is a block diagram illustrating a data structure 400 for metadata associated with a file comprised in a software service, according to exemplary embodiments.

**.** The metadata associated with the software service file comprises information related to the software service file and information related to the expected operational features and/or the expected performance of the software service file. Accordingly, the data structure 400 comprises data elements 401 related to the software service file and data elements 402 related to the expected operational features and/or the expected performance of the software service file.

**.** The data elements 401 enable a unique identification of the software service file. For example, in an embodiment, the data elements 401 comprise one or more of the following elements :
- a first data element, of exemplary attribute field 'software service identifier (ID)', specifying an identifier of the software service in which is comprised the software service file ;
- a second data element, of exemplary attribute field 'service type', specifying the service ensured by the software service file;
- a third data element, of exemplary attribute field 'software service version', specifying a version of the software service in which is comprised the software service file ;
- a fourth data element, of exemplary attribute field `file group', specifying if the software service file is a library file or an executable file ;
- a fifth data element, of exemplary attribute field 'file name', specifying a name of the software service file ; and
- sixth data element, of exemplary attribute field `software service vendor', specifying the vendor of the software service in which is comprised the software service file.

**.** For example, in an embodiment, the data element 402 comprise one or more of the following elements:
- a first data element, of exemplary attribute field 'disk size', specifying the amount of disk size expected to be used by the software service file ;
- a second data element, of exemplary attribute field 'memory', specifying the amount of memory expected to be used by the software service file ;
- a third data element, of exemplary attribute field 'CPU usage', specifying the amount of processing resources expected to be used by the software service file ;
- a fourth data element, of exemplary attribute field 'ports numbers', specifying the port number expected to be used by the software service file ;
- a fifth data element, of exemplary attribute field 'read/Write performance', specifying read/write bytes per second expected to be performed by the software service file ;
- a sixth data element, of exemplary attribute field 'time stamp performance', specifying expected time stamp related with logs provided.

**.** FIG. 5 is a block diagram illustrating a data structure 500 for a data analytics negotiation response, according to exemplary embodiments. The data structure 500 comprises data elements related to the negotiated parameters in relation with the generation of the data analytics. For example, the data structure comprises data elements 501 related to the negotiated reporting parameters and data element 502 related to the negotiated storage and computing/processing parameters.

**.** For example, in an embodiment, the data elements 501 comprise one or more of the following data elements :
- a first data element, of an exemplary attribute field 'negotiated reporting time period', specifying the new negotiated time period for the reporting of the data analytics ;
- a second data element, of an exemplary attribute field 'negotiated reporting type logs', specifying the new negotiated data analytics reporting method, and
- a third data element, of an exemplary attribute field 'negotiated reporting wait time', specifying the new negotiated waiting time period for getting the data analytics reporting.

**.** For example, in an embodiment, the data element 502 comprise one or more of the following data elements:
- a first data element, of an exemplary attribute field 'negotiated storage Expenses', specifying the amount of storage needed for data analytics, and
- a second data element, of an exemplary attribute field 'negotiated processing Expenses', specifying the amount of processing resources needed for the data analytics.

**.** FIG. 6 is a block diagram illustrating a data structure 600 for a response on a data analytics request, according to exemplary embodiments.

**.** The data structure 600 comprises data elements 601 related to the generated data analytics, data elements 602 related to one or more detected or predicted events related to the security of the one or more target software service 101-i, and data elements 603 related to next input data.

**.** The data elements 601 enable characterizing the generation and/or delivery of the data analytics. For example, in an embodiment, the data element 601 comprise one or more of the following data elements:
- a first data element, of an exemplary attribute field 'analytics name', specifying a name of the provided analytics service ;
- a second data element, of an exemplary attribute field, 'name of the analytics model', specifying the name of the analytics model used to generate the data analytics ;
- a third data element, of an exemplary attribute field 'analytics type', specifying the type of the generated data analytics (e.g. statistics, predictions, recommendation) ;
- a fourth data element, of an exemplary attribute field `reporting time', specifying a time stamp related to the generated data analytics ;
- a fifth data element, of an exemplary attribute field 'target objects', specifying the objects related with the generated data analytics ;
- a sixth data element, of an exemplary attribute field 'geographical localization', specifying the location related with the generated data analytics ;
- a seventh data element, of an exemplary attribute field 'analytics data', specifying the values of the generated data analytics ;
- an eighth data element, of an exemplary attribute field 'analytics recommendations', specifying output recommendations ;
- a nineth data element, of an exemplary attribute field 'confidence degree', specifying a confidence level related to the generated data analytics.

**.** The data elements 602 enable identifying the one or more detected or predicted events related to the security of the one or more target software service 101-i.

**.** In an embodiment, data elements 602 enable further characterizing the one or more detected or predicted events related to the security of the one or more target software service 101-i.

**.** For example, in an embodiment, the data elements 602 comprise one or more of the following data elements:
- a first data element, of an exemplary attribute field 'security issue', specifying the detected or predicted security issue;
- a second data element, of an exemplary attribute field 'security root cause', specifying the root cause result related with the detected or predicted security issue;
- a third data element, of an exemplary attribute field 'severity level', specifying the criticality of the detected or predicted security issue (low, medium, or high);

**.** For example, the data element 603 comprise:
- a first data element, of an exemplary attribute field 'next expected input', specifying expected next input data;
- a second data element, of an exemplary attribute field 'next input time', specifying the expected time of the next input data.

**.** It should be appreciated by those skilled in the art that any functions, engines, block diagrams, flow diagrams, state transition diagrams and/or flowcharts herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or apparatus, whether such computer or processor is explicitly shown.

**.** Each described computation function, block, step can be implemented in hardware, software, firmware, middleware, microcode, or any suitable combination thereof. If implemented in software, the computation functions, blocks of the block diagrams and/or flowchart illustrations can be implemented by computer program instructions / software code, which may be stored or transmitted over a computer-readable medium, or loaded onto a general purpose computer, special purpose computer or other programmable apparatus and / or system to produce a machine, such that the computer program instructions or software code which execute on the computer or other programmable apparatus, create the means for implementing the functions described herein.

**.** When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause an apparatus to perform the necessary tasks. Additionally, the processor, memory and example algorithms, encoded as computer program code, serve as means for providing or causing performance of operations discussed herein.

**.** One or more example embodiments provide an apparatus comprising means for performing one or more or all steps and / or functions disclosed herein for the data analytics producer.

**.** According to one or more examples, the apparatus may include means for: receiving a request for data analytics related to one or more target software services; receiving input data comprising software service metadata associated with the target software services and one or more audit log files associated with the target software services; generating data analytics from the input data.

**.** Generally, the means may include circuitry configured to perform the steps and/or functions disclosed herein for the data analytics producer. The means may include at least one processor and at least one memory including computer program code, wherein the at least one memory and the computer program code are configured to, with the at least one processor, cause the apparatus to perform one or more or all steps and/or functions disclosed herein for the data analytics producer.

**.** In the present description, block denoted as "means configured to" perform a certain function or "means for" performing a certain function shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

**.** As used in this application, the term "circuit" or "circuitry" may refer to one or more or all of the following:
(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

**.** This definition of "circuit" or "circuitry" applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device. The term circuitry may cover digital signal processor (DSP) hardware, network processor, application specific integrated circuit (ASIC), field programmable gate array (FPGA), etc.

**.** The "circuit" or "circuitry" may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

**.** The "circuit" or "circuitry" may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via a radio network (e.g., after being down-converted by radio transceiver, for example).

**.** As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

**.** It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

**.** The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A data analytics producer (102) configured to :
- receive a request for data analytics related to one or more target software services (101-i) comprising one or more software service files;
- receive one or more audit log files associated with the target software services, said audit log files comprising information related to current operational features and/or current performance of the software service files;- receive software service metadata associated with the target software services, said software service metadata comprising information related to expected operational features and/or expected performance of the software service files;
- generate data analytics by comparing the expected operational features and/or performance defined by the software service metadata with the current operational behaviour defined by the audit log files.

2. The data analytics producer (102) claim 1, wherein the software service metadata comprise information related to the software service file.

3. The data analytics producer (102) of any preceding claim, wherein the software service metadata is generated by a vendor of the target software service (101-i).

4. The data analytics producer (102) of any preceding claim, wherein the software service metadata is updated by a vendor of the target software service (101-i) when the target software service is updated.

5. The data analytics producer (102) of any preceding claim 2 to 4, wherein the audit log file associated with a target software service (101-i) comprises information related to the software service file.

6. The data analytics producer (102) of any preceding claim, wherein the data analytics producer (102) is configured to negotiate audit log generation specifications with a data analytics request provider (103).

7. The data analytics producer (102) of any preceding claim, wherein the audit log file associated with a target software service (101-i) is generated regularly and/or upon request.

8. The data analytics producer (102) of claims 6 and 7, wherein the audit log file associated with a target software service (101-i) is generated according to the audit log files generation specifications.

9. The data analytics producer (102) of any preceding claim, wherein the request for data analytics is triggered according to a request for security assessment and/or for operational behaviour assessment in relation with one or more target software services (101-i) operable in a telecommunication network (100).

10. The data analytics producer (102) of claim 9, wherein the request for security assessment and/or for operational behaviour assessment is triggered by a security management entity (110) operable in the telecommunication network (100) or by the one or more target software services (101-i).

11. The data analytics producer (102) of any preceding claim 9 to 10, wherein the request for security assessment and/or for operational behaviour assessment is triggered depending on performance measurements associated with the one or more target software services (101-i).

12. The data analytics producer (102) of any preceding claim, wherein the one or more target software services are deployed on one or more cloud platforms and/or on one or more private servers and/or private platforms and/or interact with one or more software services deployed on one or more cloud platforms and/or on one or more private servers and/or private platforms.

13. The data analytics producer (102) of any preceding claim, wherein the target software service is one of a network function, a virtualized network function, a management function, a virtualized management function, or a software application.

14. The data analytics producer (102) of any preceding claim, wherein the data analytics producer (102) is implemented in a network data analytics function or in a management data analytics service.

15. The data analytics producer (102) of any preceding claim, wherein the data analytics producer (102) is configured to send a response on the request for data analytics, the response comprising information related to one or more detected and/or predicted events related to the security and/or the behaviour of the one or more target software services (101-i).

## Patentansprüche

1. Datenanalyseerzeuger (102), der zu Folgendem ausgelegt ist:
- Empfangen einer Anforderung einer Datenanalyse, die einen oder mehrere Zielsoftwaredienste (101-i) betrifft, die eine oder mehrere Softwaredienstdateien umfassen;
- Empfangen von einer oder mehreren Auditprotokolldateien, die mit den Zielsoftwarediensten verknüpft sind, wobei die Auditprotokolldateien Informationen umfassen, die aktuelle Betriebsmerkmale und/oder eine aktuelle Leistung der Softwaredienstdateien betreffen;
- Empfangen von Softwaredienstmetadaten, die mit den Zielsoftwarediensten verknüpft sind, wobei die Softwaredienstmetadaten Informationen umfassen, die erwartete Betriebsmerkmale und/oder eine erwartete Leistung der Softwaredienstdateien betreffen;
- Erzeugen einer Datenanalyse durch Vergleichen der erwarteten Betriebsmerkmale und/oder einer durch die Softwaredienstmetadaten definierten Leistung mit dem aktuellen Betriebsverhalten, das durch die Auditprotokolldateien definiert ist.

2. Datenanalyseerzeuger (102) nach Anspruch 1, wobei die Softwaredienstmetadaten Informationen umfassen, die die Softwaredienstdatei betreffen.

3. Datenanalyseerzeuger (102) nach einem der vorhergehenden Ansprüche, wobei die Softwaredienstmetadaten durch einen Anbieter des Zielsoftwaredienstes (101-i) erzeugt werden.

4. Datenanalyseerzeuger (102) nach einem der vorhergehenden Ansprüche, wobei die Softwaredienstmetadaten durch einen Anbieter des Zielsoftwaredienstes (101-i) aktualisiert werden, wenn der Zielsoftwaredienst aktualisiert wird.

5. Datenanalyseerzeuger (102) nach einem der vorhergehenden Ansprüche 2 bis 4, wobei die Auditprotokolldatei, die mit einem Zielsoftwaredienst (101-i) verknüpft ist, Informationen umfasst, die die Softwaredienstdatei betreffen.

6. Datenanalyseerzeuger (102) nach einem der vorhergehenden Ansprüche, wobei der Datenanalyseerzeuger (102) dazu ausgelegt ist, Auditprotokollerzeugungsspezifikationen mit einem Datenanalyseanforderungsbereitsteller (103) zu verhandeln.

7. Datenanalyseerzeuger (102) nach einem der vorhergehenden Ansprüche, wobei die Auditprotokolldatei, die mit einem Zielsoftwaredienst (101-i) verknüpft ist, regelmäßig und/oder nach Anforderung erzeugt wird.

8. Datenanalyseerzeuger (102) nach Anspruch 6 und 7, wobei die Auditprotokolldatei, die mit einem Zielsoftwaredienst (101-i) verknüpft ist, gemäß den Auditprotokolldateierzeugungsspezifikationen erzeugt wird.

9. Datenanalyseerzeuger (102) nach einem der vorhergehenden Ansprüche, wobei die Anforderung einer Datenanalyse gemäß einer Anforderung einer Sicherheitsbeurteilung und/oder einer Betriebsverhaltensbeurteilung mit Bezug auf einen oder mehrere Zielsoftwaredienste (101-i) ausgelöst wird, die in einem Telekommunikationsnetzwerk (100) betreibbar sind.

10. Datenanalyseerzeuger (102) nach Anspruch 9, wobei die Anforderung einer Sicherheitsbeurteilung und/oder einer Betriebsverhaltensbeurteilung durch eine Sicherheitsverwaltungsentität (110), die im Telekommunikationsnetzwerk (100) betreibbar ist, oder durch den einen oder die mehreren Zielsoftwaredienste (101-i) ausgelöst wird.

11. Datenanalyseerzeuger (102) nach einem der vorhergehenden Ansprüche 9 bis 10, wobei die Anforderung einer Sicherheitsbeurteilung und/oder einer Betriebsverhaltensbeurteilung in Abhängigkeit von Leistungsmessungen ausgelöst wird, die mit dem einen oder den mehreren Zielsoftwarediensten (101-i) verknüpft sind.

12. Datenanalyseerzeuger (102) nach einem der vorhergehenden Ansprüche, wobei der eine oder die mehreren Zielsoftwaredienste auf einer oder mehreren Cloudplattformen und/oder auf einem oder mehreren privaten Servern und/oder auf privaten Plattformen implementiert werden und/oder mit einem oder mehreren Softwarediensten interagieren, die auf einer oder mehreren Cloudplattformen und/oder auf einem oder mehreren privaten Servern und/oder auf privaten Plattformen implementiert werden.

13. Datenanalyseerzeuger (102) nach einem der vorhergehenden Ansprüche, wobei der Zielsoftwaredienst eines von einer Netzwerkfunktion, einer virtualisierten Netzwerkfunktion, einer Verwaltungsfunktion, einer virtualisierten Verwaltungsfunktion oder einer Softwareanwendung ist.

14. Datenanalyseerzeuger (102) nach einem der vorhergehenden Ansprüche, wobei der Datenanalyseerzeuger (102) in einer Netzwerkdatenanalysefunktion oder in einem Verwaltungsdatenanalysedienst eingesetzt wird.

15. Datenanalyseerzeuger (102) nach einem der vorhergehenden Ansprüche, wobei der Datenanalyseerzeuger (102) dazu ausgelegt ist, eine Antwort auf die Anforderung einer Datenanalyse zu senden, wobei die Antwort Informationen umfasst, die eine oder mehrere detektierte und/oder vorhergesagten Ereignisse betreffen, die die Sicherheit und/oder das Verhalten des einen oder der mehreren Zielsoftwaredienste (101-i) betreffen.

## Revendications

1. Producteur d'analyse de données (102) configuré pour :
- recevoir une demande d'analyse de données relative à un ou plusieurs services logiciels cibles (101-i) comprenant un ou plusieurs fichiers de services logiciels ;
- recevoir un ou plusieurs fichiers de liste de contrôle associés aux services logiciels cibles, lesdits fichiers de liste de contrôle comprenant des informations relatives à des caractéristiques opérationnelles actuelles et/ou à des performances actuelles des fichiers de services logiciels ;
- recevoir des métadonnées de services logiciels associées aux services logiciels cibles, lesdites métadonnées de services logiciels comprenant des informations relatives à des caractéristiques opérationnelles attendues et/ou à des performances attendues des fichiers de services logiciels ;
- générer une analyse de données en comparant les caractéristiques opérationnelles et/ou les performances attendues définies par les métadonnées de services logiciels avec le comportement opérationnel actuel défini par les fichiers de liste de contrôle.

2. Producteur d'analyse de données (102) de la revendication 1, dans lequel les métadonnées de services logiciels comprennent des informations relatives au fichier de service logiciel.

3. Producteur d'analyse de données (102) de l'une des revendications précédentes, dans lequel les métadonnées de services logiciels sont générées par un distributeur du service logiciel cible (101-i).

4. Producteur d'analyse de données (102) de l'une des revendications précédentes, dans lequel les métadonnées de services logiciels sont mises à jour par un distributeur du service logiciel cible (101-i) lorsque le service logiciel cible est mis à jour.

5. Producteur d'analyse de données (102) de l'une des revendications précédentes 2 à 4, dans lequel le fichier de liste de contrôle associé à un service logiciel cible (101-i) comprend des informations relatives au fichier de service logiciel.

6. Producteur d'analyse de données (102) de l'une des revendications précédentes, dans lequel le producteur d'analyse de données (102) est configuré pour négocier des spécifications de génération de liste de contrôle avec un fournisseur de demande d'analyse de données (103).

7. Producteur d'analyse de données (102) de l'une des revendications précédentes, dans lequel le fichier de liste de contrôle associé à un service logiciel cible (101-i) est généré régulièrement et/ou sur demande.

8. Producteur d'analyse de données (102) de la revendications 6 et 7, dans lequel le fichier de liste de contrôle associé à un service logiciel cible (101-i) est généré selon les spécifications de génération de fichiers de liste de contrôle.

9. Producteur d'analyse de données (102) de l'une des revendications précédentes, dans lequel la demande d'analyse de données est déclenchée selon une demande d'une évaluation de sécurité et/ou d'une évaluation de comportement opérationnel en relation avec un ou plusieurs services logiciels cibles (101-i) pouvant fonctionner dans un réseau de télécommunication (100).

10. Producteur d'analyse de données (102) de la revendication 9, dans lequel la demande d'une évaluation de sécurité et/ou d'une évaluation de comportement opérationnel est déclenchée par une entité de gestion de sécurité (110) pouvant fonctionner dans le réseau de télécommunication (100), ou par les un ou plusieurs services logiciels cibles (101-i).

11. Producteur d'analyse de données (102) de l'une des revendications précédentes 9 et 10, dans lequel la demande d'une évaluation de sécurité et/ou d'une évaluation de comportement opérationnel est déclenchée en fonction de mesures de performances associées aux un ou plusieurs services logiciels cibles (101-i).

12. Producteur d'analyse de données (102) de l'une des revendications précédentes, dans lequel les un ou plusieurs services logiciels cibles sont déployés sur une ou plusieurs plateformes en nuage et/ou sur un ou plusieurs serveurs privés et/ou plateformes privées, et/ou interagissent avec un ou plusieurs services logiciels déployés sur une ou plusieurs plateformes en nuage et/ou sur un ou plusieurs serveurs privés et/ou plateformes privées.

13. Producteur d'analyse de données (102) de l'une des revendications précédentes, dans lequel le service logiciel cible est une parmi une fonction de réseau, une fonction de réseau virtualisée, une fonction de gestion, une fonction de gestion virtualisée, ou une application logicielle.

14. Producteur d'analyse de données (102) de l'une des revendications précédentes, dans lequel le producteur d'analyse de données (102) est mis en œuvre dans une fonction d'analyse de données de réseau ou dans un service d'analyse de données de gestion.

15. Producteur d'analyse de données (102) de l'une des revendications précédentes, dans lequel le producteur d'analyse de données (102) est configuré pour envoyer une réponse sur demande d'analyse de données, la réponse comprenant des informations relatives à un ou plusieurs événements détectés et/ou prédits relatifs à la sécurité et/ou au comportement des un ou plusieurs services logiciels cibles (101-i).
